# EUROPÄISCHE PATENTSCHRIFT

(11) **EP 2 801 513 B1**
(45) Veröffentlichungstag und Bekanntmachung des Hinweises auf die Patenterteilung: **31.07.2019**
(21) Anmeldenummer: 14167347.5
(22) Anmeldetag: 07.05.2014
(51) Int. Cl.: B62D 33/04, B62D 33/02

(54) **Eine Bebauung zur Warenbeförderung zur Anbringung auf ein Fahrgestell**
A structure for transporting goods for attaching to a vehicle chassis
Une structure pour le transport d'articles pour fixer à un châssis de véhicule

(30) Priorität: 08.05.2013 PL 40380213; 19.12.2013 DE 102013114480
(43) Veröffentlichungstag der Anmeldung: 12.11.2014
(73) Patentinhaber: Gniotpol Trailers Spólka z Ograniczona Odpowiedzialnoscia, 46-037 Kurznie (PL)
(72) Erfinder: Krystyna, Gniot, 46-037 Kurznie (PL); Gniot, Wojciech, 47-316 Odrowaz (PL); Gniot, Kazimierz, 46-037 Kurznie (PL)
(74) Vertreter: Kohlhof, Stephan

(56) Entgegenhaltungen:
- EP-A2- 1 867 509
- BE-A6- 1 005 536
- DE-U1- 20 301 201

## Beschreibung

Gegenstand der Erfindung ist die Bebauung zur Warenbeförderung.

Bekannt sind die auf dem Fahrgestell angebrachten Bebauungen zur Warenbeförderung als Quaderkonstruktionen, die aus den senkrechten Pfosten und waagerechten Leisten, die miteinander verbunden sind, dem waagerechten Boden und Dach sowie den Seitenwänden, der Vorder- und Heckwand aufgebaut sind.

Die bekannten Bebauungen mit der Breite von 2480 mm lassen den Laderaum nicht vollständig ausnutzen und die palettierte Ware mit denselben Dimensionen wie die Palette oder die als Blöcke (Kartons, Styropor) geladene Ware wurde beschädigt.

DE 203 01 201 U1 offenbart eine Runge für Fahrzeuge mit Planenaufbauten. Die Runge weist einen geradlinigen Mittelabschnitt auf, an welchem einseitig Auskragungen ausgebildet sind, wodurch eine längsseitliche Sicherung der Ladeeinheiten erreicht wird. Dieses Dokument offenbart ebenfalls den Oberbegriff des Anspruchs 1.

Es ist Aufgabe der vorliegenden Erfindung, die bekannten Aufbauten für Fahrzeuge zu verbessern. Diese Aufgabe wird gelöst durch eine Bebauung zur Warenbeförderung nach Anspruch 1; Ausgestaltungen sind Gegenstand der Unteransprüche sowie der Beschreibung.

In der erfindungsgemäßen Bebauung ist der waagerechte Boden mit zwei senkrechten Heckpfosten, zwischen denen die Heckwand befestigt ist, und mit zwei senkrechten Vorderpfosten, zwischen denen die Vorderwand befestigt ist, verbunden. An den Heck- und Vorderpfosten sind waagerechte Dachleisten befestigt, die auch am Dach befestigt sind. Zusätzlich befinden sich vorzugsweise mindestens zwei senkrechte Mittelleisten an beiden Seiten der Bebauung, die die Dachleisten mit dem Boden verbinden, an denen auch waagerechte Mittelleisten befestigt sind. Die senkrechten Mittelleisten sind rechteckige Flachstangen, die am Kopfende mit Rollen zur Befestigung an der Dachleiste und am Fußende mit Hacken zur Befestigung am Boden ausgestattet sind, die an seitlichen Flächen Aussparungen zur Befestigung der C-Verbindungsstücke zum Anbringen der waagerechten Mittelleisten besitzen. Die waagerechten Mittelleisten sind rechteckige Flachstangen, die an seitlichen Flächen Aussparungen zur Befestigung der Verbindungsstücke besitzen. Die untere waagerechte Mittelleiste besitzt zusätzlich eine für eine Kralle bestimmte Aussparung zur Befestigung am Boden der Bebauung. Die Heckpfosten der Bebauung sind aus Formstücken mit rechteckigem Querschnitt hergestellt, die vorzugsweise innere Aussparungen besitzen, die am Kopfende mit einer Aussparung zur verschiebbaren Befestigung der waagerechten Mittelleisten enden und am Fußende gerundet sind und auf einer Seite eine äußere Aussparung zur Befestigung der Heckwand besitzen.

Die senkrechten vorderen Pfosten sind aus Formstücken mit Winkelquerschnitt hergestellt, die gerundete Ecken und innere Aussparungen besitzen, die am Kopfende mit einer Aussparung zur verschiebbaren Befestigung der waagerechten Mittelleisten und am Fußende mit einer Aussparung zum Anbringen der Vorderwand versehen sind. Die Dachleisten sind aus Formstücken hergestellt, die äußere Vorsprünge, insbesondere besitzen, an einem Ende sind sie mit einem offenen Vorsprünge, insbesondere Feder zur Einführung der Rollen der Mittelleiste versehen und an einem Ende besitzen sie Vorsprünge, insbesondere Federn zur Dachbefestigung. Im Fall der Befestigung eines Festdachs sind die Formstücke im Querschnitt rechteckig, dagegen im Fall der Befestigung eines Schiebedachs sind sie im Querschnitt winkelförmig.

Der Aufbau der erfundenen Bebauung lässt die innere Bebauungsbreite von 2500 mm bis 2504 mm beim gleichzeitigen Einhalten der vorschriftlich zugelassenen äußeren Breite von 2550 mm erreichen.

Der erfindungsgemäße Gegenstand ist auf Zeichnungen dargestellt, wobei
auf Zeichnung 1 die allgemeine Sicht der Bebauung,
auf Zeichnung 2 die Verbindung der senkrechten Mittelleiste mit der Dachleiste,
auf Zeichnung 3 die Verbindung der senkrechten Mittelleiste mit der waagerechten Mittelleiste und dem Boden,
auf Zeichnung 4 der Querschnitt des Heckpfostens,
auf Zeichnung 5 der Querschnitt des Vorderpfostens,
auf Zeichnung 6 der Querschnitt der Dachleiste, die für das Festdach bestimmt ist, und
auf Zeichnung 7 der Querschnitt der Dachleiste, die für das Schiebedach bestimmt ist, dargestellt sind.

Die auf dem Fahrgestell angebrachte, erfindungsgemäße Bebauung zur Warenbeförderung bildet eine quaderförmige Konstruktion aus, die besteht aus:
den senkrechten Pfosten 2, 4 und den waagerechten Leisten 6, die miteinander verbunden sind, dem waagerechten Boden 1 und Dach 7 sowie den senkrechten seitlichen Wänden 8, der Vorderwand 5 und Heckwand 3.

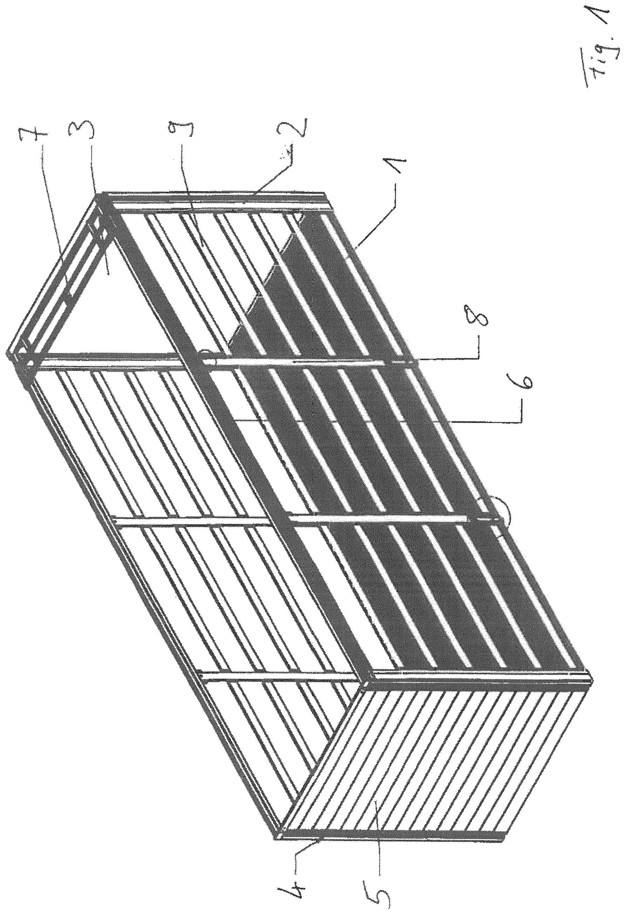

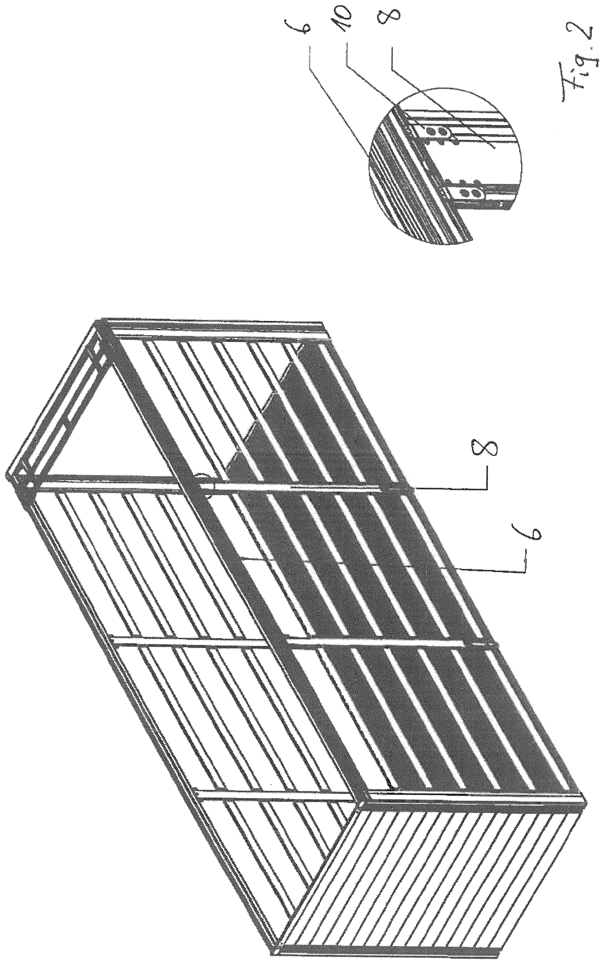

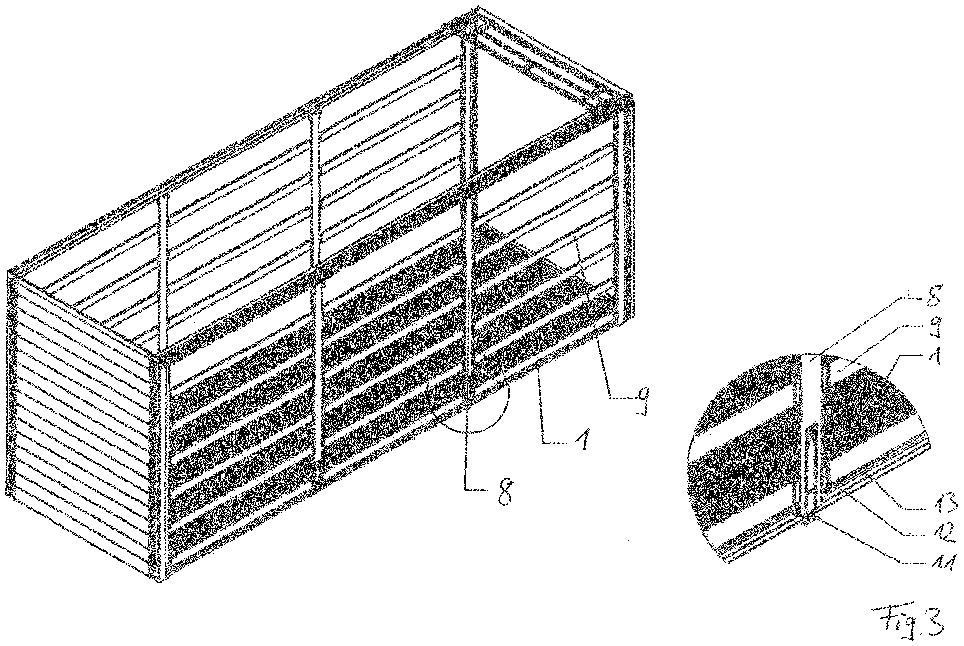

In der Bebauung ist der waagerechte Boden 1 mit zwei senkrechten Heckpfosten 2, zwischen denen die Heckwand 3 angebracht ist, und mit zwei senkrechten Vorderpfosten 4, zwischen denen die Vorderwand 5 angebracht ist, verbunden. An den Heckpfosten 2 und Vorderpfosten 4 sind auch die waagerechten Dachleisten 6 befestigt, die auch am Dach 7 befestigt sind. Zusätzlich befindet sich mindestens je eine senkrechte Mittelleiste 8 an beiden Seiten der Bebauung, die die Dachleisten 6 mit dem Boden 1 verbinden, an denen auch die waagerechten Mittelleisten 9 befestigt sind. Die senkrechten Mittelleisten 8 sind rechteckige Flachstangen, die am Kopfende mit Rollen 10 zur Befestigung an der Dachleiste 6 ausgestattet sind (Figur 2) und am Fußende mit Hacken 11 zur Befestigung am Boden 1 ausgestattet sind (Figur 3), die an seitlichen Flächen Aussparungen zur Befestigung der C-Verbindungsstücke 12 zum Anbringen der waagerechten Mittelleisten 9 besitzen. Die waagerechten Mittelleisten 8 sind rechteckige Flachstangen, die auf seitlichen Flächen Aussparungen zur Befestigung der Verbindungsstücke 12 besitzen.

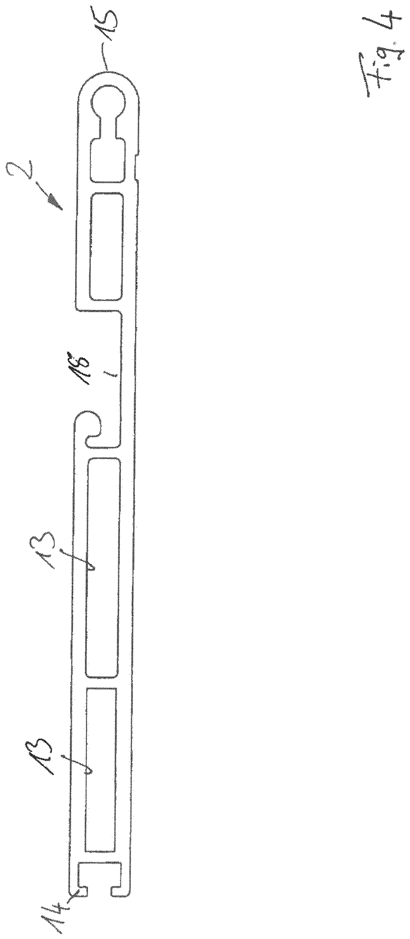

Die Heckpfosten 2 der Bebauung (Figur 4) sind Formstücke mit rechteckigem Querschnitt, die innere Aussparungen 13 besitzen, die am Kopfende mit einer Aussparung 14 zur verschiebbaren Befestigung der waagerechten Dachleisten 6 enden und am Fußende 15 gerundet sind und auf einer Seite eine äußere Aussparung 18 zur Befestigung der Heckwand 3 besitzen.

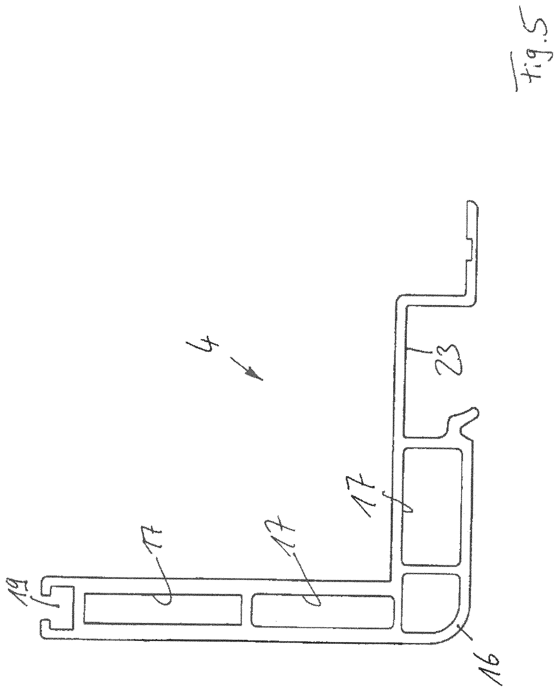

Die Vorderpfosten 4 (Figur 5) sind aus Formstücken mit Winkelquerschnitt hergestellt, die gerundete Ecken 16 und innere Aussparungen 17 besitzen, die am Kopfende mit einer Aussparung 19 zur verschiebbaren Befestigung der waagerechten Mittelleisten 9 und am Fußende mit einer Aussparung 23 zum Anbringen der Vorderwand 5 versehen sind.

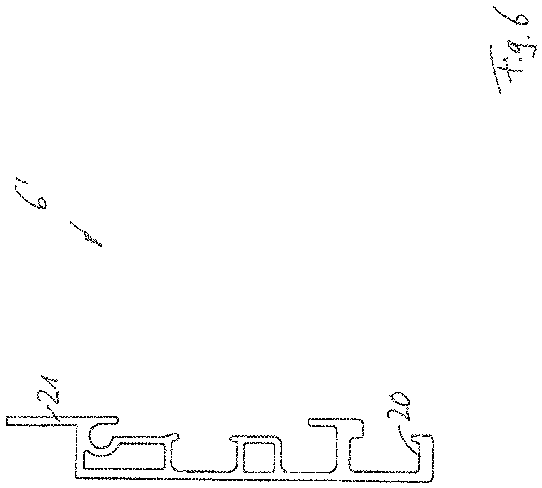

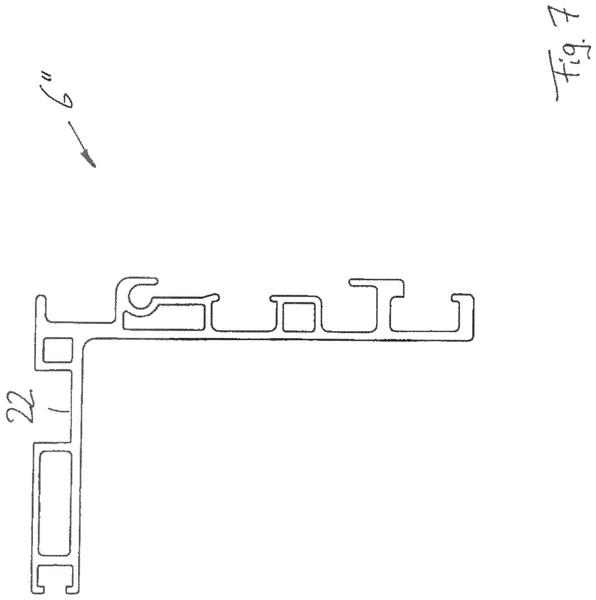

Die Dachleisten 6 (Figur 6) bestehen aus Formstücken, die äußere Federn besitzen, an einem Ende sind sie mit einer offenen Feder 20 zur Einführung der Rollen 10 der Mittelleiste 9 versehen und an einem Ende besitzen sie Federn 21 zur Befestigung des Dachs 7.

Es ist vorteilhaft, wenn die untere waagerechte Mittelleiste 9 eine für die Kralle 13 bestimmte Aussparung zur Befestigung am Boden 1 besitzt.

Wird das Dach 7 als Festdach befestigt, besteht die Dachleiste 6 aus Formstücken mit rechteckigem Querschnitt, die mit Aussparungen zur Festdachbefestigung ausgestattet sind.

Wird das Dach 7 an der Bebauung als Schiebedach befestigt, besteht die Dachleiste 6" (Figur 6) aus Formstücken mit Winkelquerschnitt, die mit Aussparungen 22 zur Schiebedachbefestigung ausgestattet sind.

## Patentansprüche

1. Eine Bebauung zur Warenbeförderung zur Anbringung auf ein Fahrgestell ausgebildet als eine Quaderkonstruktion, umfassend miteinander verbundene, senkrechte Pfosten (2, 4, 8) und waagerechte Leisten (9), einen waagerechten Boden (1) und ein Dach (7) sowie Seitenwände, eine Vorder- und eine Heckwand,
wobei der waagerechte Boden (1) mit zwei senkrechten Heckpfosten (2), zwischen denen die Heckwand (3) angebracht ist, und mit zwei senkrechten Vorderpfosten (4), zwischen denen die Vorderwand (5) angebracht ist, verbunden ist,
wobei an diesen Heck- (2) und Vorderpfosten (4) waagerechte Dachleisten (6) befestigt sind, die am Dach (7) befestigt sind,
zusätzlich befindet sich mindestens je eine senkrechte Mittelleiste (8) an beiden Seiten der Bebauung, die die Dachleisten (6) mit dem Boden (1) verbinden, an denen die waagerechten Mittelleisten (9) befestigt sind,
**dadurch gekennzeichnet,**
**dass** die senkrechten Mittelleisten (8) rechteckige Flachstangen sind, die am Kopfende mit Rollen (10) zur Befestigung an der Dachleiste (6) und am Fußende mit Hacken (11) zur Befestigung am Boden (1) ausgestattet sind, und an seitlichen Flächen Aussparungen zur Befestigung von C-Verbindungsstücke (12) zum Anbringen der waagerechten Mittelleisten (9) besitzen,
wobei die waagerechten Mittelleisten als rechteckige Flachstangen ausgebildet sind, die an seitlichen Flächen Aussparungen zur Befestigung der Verbindungsstücke (12) besitzen, die Heckpfosten (2) sind aus Formstücken mit rechteckigem Querschnitt hergestellt, die innere Aussparungen (13) besitzen, am Fußende (15) sind die Heckpfosten gerundet und besitzen auf einer Seite eine äußere Aussparung (18) zur Befestigung der Heckwand (3), die senkrechten Vorderpfosten (4) sind aus Formstücken mit Winkelquerschnitt hergestellt, die gerundete Ecken (16) und innere Aussparungen (17) besitzen, die am Fußende mit einer Aussparung (23) zum Anbringen der Vorderwand (5) versehen sind,
die Dachleisten (6) sind als Formstücke ausgebildet, die äußere Vorsprünge besitzen, an einem Ende sind sie mit einem offenen Vorsprung (20) zur Einführung
der Rollen (10) der Mittelleiste (9) versehen und an einem Ende besitzen sie Vorsprünge (21) zur Befestigung des Dachs (7).

2. Die Bebauung nach Anspruch 1,
dadurch charakterisiert,
dass eine untere waagerechte Mittelleiste (9) eine für eine Kralle (13) vorgesehene Aussparung zur Befestigung am Boden (1) besitzt.

3. Die Bebauung nach Anspruch 1 oder 2,
dadurch charakterisiert,
dass die Dachleiste (6') Formstücke mit rechteckigem Querschnitt bilden, die mit Aussparungen (21) zur Festdachbefestigung versehen sind.

4. Die Bebauung nach Anspruch 1 oder 2,
dadurch charakterisiert,
dass die Dachleiste (6") Formstücke mit Winkelquerschnitt bilden, die mit Aussparungen (22) zur Schiebedachbefestigung versehen sind.

## Claims

1. A construction for transporting goods for mounting on a chassis formed as
a cuboid structure, comprising interconnected vertical posts (2, 4, 8)
and horizontal strips (9), a horizontal floor (1) and a roof (7), and
side walls, a front and a rear wall,
wherein the horizontal floor (1) is connected to two vertical rear posts (2), between which the rear wall (3) is attached, and to two vertical front posts (4), between
which the front wall (5) is mounted,
wherein horizontal roof strips (6), which are fastened to the roof (7), being fastened to these said rear (2) and front posts (4),
in addition at least a vertical centre strip (8) is located on each side of the construction, which connects the roof strips (6) with the floor (1), to which the horizontal centre strips (9) are fastended,
**characterized in**
**that** the vertical centre strips (8) are rectangular flat bars, which are equipped at the head end with rollers (10) for fastening to the roof strip (6) and at the foot end with hooks (11) for fastening to the floor (1), and on lateral surfaces having recesses for fastening C-connecting fittings (12) for attaching the horizontal centre strips (9),
wherein the horizontal centre strips being in the form of rectangular flat bars, which have recesses on lateral surfaces for fastening the connecting pieces (12),
the rear posts (2) are made of formed parts of rectangular cross-section which
have inner recesses (13), at the foot end (15) the rear posts are rounded and
have on one side an outer recess (18) for fastening the rear wall (3),
the vertical front posts (4) are made of formed parts of angular cross-section having rounded corners (16) and internal recesses (17), which are provided at the foot end with a recess (23) for attaching the front wall (5),
the roof strips (6) are made of formed parts having outer projections, these are provided at one end provided with an open projection (20) for insertion
of the rollers (10) of the centre strips (9) and at one end comprising projections
(21) for fastening the roof (7).

2. The construction according to claim 1,
**characterized in**
**that** a lower horizontal centre strip comprises a recess, provided for a claw for attaching at the floor (1).

3. The construction according to claim 1 or 2,
**characterized in**
**that** the roof strip (6') constitutes formed pieces having a rectangular cross section, which are provided with recesses (21) for solid roof fixation.

4. The construction according to claim 1 or 2,
**characterized in**
**that** the roof strip (6") constitutes formed pieces having an angular cross section, which are provided with recesses (21) for sliding roof fixation.

## Revendications

1. Construction destinée au transport de marchandises pour montage sur un châssis constituée sous la forme d'une construction parallélépipédique, comprenant des montants (2, 4, 8) verticaux, reliés entre eux et des listeaux horizontaux (9), un fond horizontal (1) et un toit (7) ainsi que des parois latérales, une paroi avant et une paroi arrière,
sachant que le fond horizontal (1) est relié à deux montants arrière perpendiculaires (2), entre lesquels est montée la paroi arrière (3) et à deux montants avant perpendiculaires (4), entre lesquels est montée la paroi avant (5),
sachant que les listeaux de toit horizontaux (6), qui sont fixés au toit (7), sont fixés sur ces montants arrière (2) et avant (4),
un listeau central perpendiculaire (8) se trouve en plus au moins respectivement sur les deux côtés de la construction, qui relient les listeaux de toit (6) au fond (1) sur lesquels sont fixés les listeaux centraux horizontaux (9),
**caractérisée en ce que**
les listeaux centraux perpendiculaires (8) sont des barres plates rectangulaires, qui sont dotées à l'extrémité de tête de galets (10) pour la fixation sur le listeau de toit (6) et à l'extrémité de pied avec un crochet (11) pour la fixation au fond (1) et possèdent sur les surfaces latérales des évidements pour la fixation de pièces d'assemblage en C (12) pour le montage des listeaux centraux horizontaux (9), sachant que les listeaux centraux horizontaux sont constitués sous la forme de barres plates rectangulaires, qui possèdent sur les surfaces latérales des évidements pour la fixation des pièces d'assemblage (12),
les montants arrière (2) sont fabriquées à partir de pièces moulées avec une section rectangulaire, qui possèdent des évidements intérieurs (13), qu'à l'extrémité de pied (15) les montants arrière sont arrondis et possèdent sur un côté un évidement extérieur (18) pour la fixation de la paroi arrière (3), les montants avant perpendiculaires (4) sont fabriqués à partir de pièces moulées avec une section angulaire, possèdent les coins arrondis (16) et des évidements intérieurs (17), qui sont dotés à l'extrémité de pied d'un évidement (23) pour monter la paroi avant (5), les listeaux de toit (6) sont constitués sous la forme de pièces moulées, qui possèdent des saillies extérieures, à une extrémité elles sont dotées d'une saillie ouverte (20) pour l'introduction des galets (10) du listeau central (9) et elles possèdent à une extrémité des saillies (21) pour la fixation du toit (7).

2. Construction selon la revendication 1,
**caractérisée en ce que**
un listeau central horizontal inférieur (9) possède un évidement prévu pour un crampon (13) pour la fixation au sol (1).

3. Construction selon la revendication 1 ou 2
**caractérisée en ce que**
les listeaux de toit (6') forment des pièces moulées avec une section rectangulaire, qui sont dotées d'évidements (21) pour la fixation du toit fixe.

4. Construction selon la revendication 1 ou 2
**caractérisée en ce que**
les listeaux de toit (6") forment des pièces moulées avec une section angulaire, qui sont dotées d'évidements (22) pour la fixation du toit ouvrant.
